# EUROPÄISCHE PATENTSCHRIFT

(11) **EP 3 607 823 B1**
(45) Veröffentlichungstag und Bekanntmachung des Hinweises auf die Patenterteilung: **04.12.2024**
(21) Anmeldenummer: 18188472.7
(22) Anmeldetag: 10.08.2018
(51) Int. Cl.: A21D 13/14, A21D 13/32, A21C 15/02, A23G 1/54, A23G 3/54, A21D 13/36

(54) **VERFAHREN UND VORRICHTUNG ZUM HERSTELLEN EINES GESCHICHTETEN LEBENSMITTELPRODUKTS**
METHOD AND DEVICE FOR MANUFACTURING A LAYERED FOODSTUFF
PROCÉDÉ ET DISPOSITIF DE FABRICATION D'UN PRODUIT ALIMENTAIRE LAMELLÉ

(43) Veröffentlichungstag der Anmeldung: 12.02.2020
(73) Patentinhaber: Bühler GmbH, 51580 Reichshof (DE)
(72) Erfinder: Madej, Aleksander, 51597 Morsbach Wittershagen (DE); Walgarth, Daniel, 53819 Neunkirchen-Seelscheid (DE); Fuhr, Benjamin, 51580 Reichshof (DE)
(74) Vertreter: Hepp Wenger Ryffel AG

(56) Entgegenhaltungen:
- EP-A1- 0 561 513
- EP-A2- 0 909 535
- WO-A1-2016/016834
- AT-B- 304 245
- DE-A1- 102013 114 753
- DE-B3- 102013 226 779
- DE-C1- 19 741 717

## Beschreibung

Die Erfindung betrifft ein Verfahren zum Herstellen eines geschichteten Lebensmittelprodukts, eine Vorrichtung zum Verbinden eines ersten im Wesentlichen plattenförmigen Lebensmittelproduktteils mit einem plattenförmigen Belag, sowie die Verwendung einer Einrichtung zum Erwärmen.

Aus der DE 197 41 717 C1, DE 10 2013 226779 B3 und der EP 3 199 030 A1 sind Vorrichtungen und Verfahren zum Herstellen von Dauerbackwaren mit einem oberen Gebäckteil, einem unteren Gebäckteil und einer Zwischenschicht bekannt.

Zwischen zwei Gebäckteilen kann beispielsweise eine flüssige, cremige oder pastöse Masse aufgetragen werden, welche die Gebäckteile miteinander verbindet und anschliessend mehr oder weniger aushärtet.

Der Nachteil bei sandwichartigen Lebensmittelprodukten, wie zum Beispiel einer Kombination von Gebäckteilen und einer Schokoladenschicht, besteht häufig darin, dass die Zwischenschicht, zum Beispiel die Schokoladenschicht, nicht gut platziert ist, sich ungleichmässig auf dem Gebäckteil verteilt und/oder womöglich sogar aus den Gebäckteilen herausquillt.

Um sandwichartige Lebensmittelprodukte optisch attraktiver zu gestalten, ist es bekannt, die Zwischenschicht als plattenförmige, formstabile Schicht zur Verfügung zu stellen. Diese muss mit dem unteren und oberen Gebäckteil verbunden werden.

Es ist bekannt, diese Verbindung über ein Fügeverfahren herzustellen. Als Fügeverfahren kommen Kleben, Zusammensetzen, Füllen, An- und Einpressen in Frage. Insbesondere kann eine Fügemasse, welche auf die Füllschicht aufgetragen werden muss, als Klebeschicht zwischen der Füllschicht und dem Gebäckteil wirken.

Die Fügemasse kann auf der Oberfläche der Zwischenschicht in Form von Rippenrändern, Noppen oder ähnlichen Strukturen vorgesehen sein.

Wird ein Klebematerial verwendet, so muss dieses vom Geschmack und der Konsistenz passend zu den übrigen Schichten sein und darf das Produkt nicht verteuern. Beim Fügeverfahren ohne zusätzliche Klebeschicht muss in der Regel eine ausreichend grosse Kraft auf die Fügepartner ausgeübt werden. Dies kann zu einer Beeinträchtigung der Schichtqualität oder zu einer Beeinträchtigung des optischen Erscheinungsbildes führen, das gerade optimiert werden soll. Ausserdem besteht das Risiko des Bruchs bei Fügepartner aus sprödem Material, zum Beispiel bei Gebäckteilen.

Es besteht daher die Aufgabe, ein Verfahren und eine Vorrichtung zur Verfügung zu stellen, welche die Nachteile des Bekannten überwindet und welche insbesondere auf einfache Weise eine exakt platzierbare und gut haltebare Verbindung zwischen zwei Schichten zur Verfügung stellt.

Die Aufgabe wird gelöst durch ein Verfahren zum Herstellen eines geschichteten Lebensmittelprodukts, welches mindestens ein erstes im Wesentlichen plattenförmiges Lebensmittelproduktteil und einen auf diesem plattenförmigen Lebensmittelproduktteil angeordneten plattenförmigen Belag umfasst. Unter einem plattenförmigen Objekt wird hier ein Objekt verstanden, welches zwei sich gegenüberliegende Oberflächen aufweist, deren Ausdehnung grösser ist als deren Abstand. Jede der Oberflächen definiert eine Seite des Objekts.

Das entsprechende Lebensmittelproduktteil und/oder der Belag besitzen damit zwei sich gegenüberliegende Oberflächen, welche die Gestalt wesentlich bestimmen. Bei dem Lebensmittelproduktteil handelt es sich um ein formstabiles Teil, mämlich um ein Gebäckteil. Der Belag kann aus einer Belagsmasse bestehen, bei der es sich um eine Fettmasse, eine Schokoladenmasse, eine Compoundmasse, eine Zuckermasse, eine Fondantmasse, ein Gelee, eine Marmelade, eine Fruchtmasse und/oder eine anderweitig aushärtende wasser- und zuckerbasierte Masse handelt.

Das Verfahren umfasst die folgenden Arbeitsschritte.

Zunächst wird ein plattenförmiger Belag hergestellt oder bereitgestellt. Der Belag ist bevorzugt bei Zimmertemperatur formstabil, das heisst, er behält seine Form unter seiner eigenen Gewichtskraft bei.

Der Belag weist auf mindestens einer Seite einen von einer Ebene erhabenen Bereich auf. Die Oberfläche des plattenförmigen Belags ist also zumindest auf einer Seite nicht eben. Der Belag besteht aus einer plattenförmigen Basisschicht mit zwei gegenüber liegenden, bevorzugt parallelen, Oberflächen, welche eben sind, und dem darauf befindlichen mindestens einen erhabenen Bereich.

Bevorzugt sind auf einer Seite mehrere erhabene Bereiche vorgesehen. Bevorzugt ist die Randfläche des plattenförmigen Belags so ausgebildet, dass sie eine optisch ansprechende Gestalt aufweist, da sie im fertigen Lebensmittelprodukt sichtbar ist. Sie ist zum Beispiel glatt. Es können aber auch Rillen oder erhabene Bereiche vorgesehen sein.

In einem weiteren Arbeitsschritt wird der mindestens eine erhabene Bereich des plattenförmigen Belags erwärmt. Bevorzugt werden alle erhabenen Bereiche auf einer Seite, bevorzugt gleichzeitig, erwärmt, wenn mehrere erhabene Bereiche vorliegen. Dies führt dazu, dass sich das Belagsmaterial unter einem Druck leichter verformen lässt. Das Material kann bei dem Erwärmungsprozess anschmelzen.

In einem weiteren Arbeitsschritt erfolgt ein Herstellen oder Bereitstellen mindestens eines plattenförmigen Lebensmittelproduktteils. Dieses wird auf der Seite des Belags mit dem erwärmten erhabenen Bereich positioniert.

Es erfolgt dann die Herstellung der Verbindung zwischen dem Lebensmittelproduktteil und dem Belag, wobei insbesondere eine Kraft ausgeübt wird, welche in Richtung des Lebensmittelprodukts und/oder in Richtung der Seite des Belags mit dem erwärmten erhabenen Bereich wirkt. Der erwärmte erhabene Bereich wirkt ähnlich wie ein Klebstoff. Wird das Lebensmittelproduktteil auf dem erwärmten erhabenen Bereich positioniert, so verformt sich dieser und bildet eine Verbindungsschicht zwischen dem Belag und dem Lebensmittelproduktteil.

Es ist also kein gesondertes Material zum Kleben notwendig. Das hergestellte geschichtete Lebensmittelprodukt kann nur aus dem Lebensmittelproduktteil und der Belagsmasse bestehen. Am Rand des geschichteten Lebensmittelprodukts ist keine störende Fügeschicht zu sehen.

Da der erwärmte erhabene Bereich sich leichter verformen lässt als die nicht erwärmte Belagsmasse, muss nur eine geringe Kraft zum Verbinden ausgeübt werden. Die Gewichtskraft des Belags oder des Lebensmittelproduktteils kann ausreichen. Das Herstellen der Verbindung erfolgt also ohne Beeinträchtigung des Belags oder des Lebensmittelproduktteils.

Der bereitgestellte plattenförmige Belag kann nur auf einer Seite einen erhabenen Bereich oder erhabenen Bereiche aufweisen. Auf der anderen Seite kann ein bereits mit dem plattenförmigen Belag verbundenes zweites plattenförmiges Lebensmittelproduktteil angeordnet sein. Auf der anderen Seite kann auch bereits eine Verzierung angebracht sein.

Der erhabene Bereich kann aus derselben Belagsmasse bestehen, wie die plattenförmige Basisschicht. Der erhabene Bereich kann aber auch eine andere oder abgeänderte Masse umfassen, die besonders gut zum Verkleben geeignet ist. Der erhabene Bereich kann beispielsweise einen höheren Fettanteil als die plattenförmige Basisschicht aufweisen. Die Masse mit dem erhöhten Fettanteil kristallisiert steifer aus und hat somit bessere Klebeigenschaften.

Der Belag kann beispielsweise in einer Form hergestellt werden, welche insbesondere das Profil des mindestens einen erhabenen Bereichs auf einer Seite des Belags vorgibt. Dazu wird Belagsmasse in eine Form gegossen und in der Form verfestigt. Der Belag kann dann aus der Form entnommen werden. Die Form weist insbesondere am Boden mindestens eine entsprechende Vertiefung auf, in welcher der mindestens eine erhabene Bereich gebildet wird. Die Form gibt ausserdem die Oberflächenbeschaffenheit der Randfläche des Belags vor. Diese ist bevorzugt glatt.

In einer vorteilhaften Weiterführung der Erfindung wird ein zweites Lebensmittelprodukt hergestellt oder bereitgestellt, das auf noch nicht verfestigte Belagsmasse gelegt wird, welche sich noch in der Form befindet. Insbesondere wird das zweite Lebensmittelproduktteil angedrückt. Da der Belag noch nicht verfestigt ist, stellt sich eine Verbindung zwischen dem Belag und dem zweiten Lebensmittelproduktteil her. Der Belag wird erst verfestigt, beispielsweise gekühlt, wenn das zweite Lebensmittelproduktteil mit dem Belag verbunden ist.

Bevorzugt entsprechen sich die Abmessungen des ersten und zweiten Lebensmittelproduktteils, sowie des Belags, so dass erstes und zweites Lebensmittelproduktteil, sowie der Belag sandwichartig übereinaderliegen können, ohne dass eine Schicht über eine andere seitlich hervorsteht.

In einem weiteren Verfahrensschritt kann das zweite Lebensmittelproduktteil zusammen mit dem Belag umgesetzt werden, wobei der Belag aus der Form entfernt wird. Bevorzugt wird das zweite Lebensmittelprodukt und der Belag von der Form wegbewegt, insbesondere ausserdem gedreht, so dass der erhabene Bereich nach oben weist. Die durch die Form gebildeten erhabenen Bereiche sind dann für eine Erhitzung zugänglich.

Bevorzugt wird das zweite Lebensmittelproduktteil zusammen mit dem mit ihm verbundenen Belag in einer Gegenform abgelegt, derart, dass der mindestens eine erhabene Bereich von der Gegenform weg weist. Der mindestens eine erhabene Bereich kann dann beispielsweise nach oben weisen, so dass von oben zum Beispiel ein Werkzeug an den Belag herangeführt werden und eine Erwärmung des erhabenen Bereichs vorgenommen werden kann.

Der erhabene Bereich kann nach der Entnahme aus der Form erwärmt werden, das erste Lebensmittelproduktteil kann an den Belag herangeführt werden und dann eine Verbindung zwischen Belag und erstem Lebensmittelproduktteil hergestellt werden. Auf diese Weise wird ein sandwich-artiges Lebensmittelprodukt erhalten.

Da der Belag in einer Form hergestellt wird und durch nachfolgende Verfahrensschritte nicht beeinträchtigt wird, genügt die Randfläche des plattenförmigen Belages allen optischen Anforderungen.

Wird die Formgrösse entsprechend der Grösse der Lebensmittelproduktteile gewählt und die Lebensmittelproduktteile präzise platziert, so kann der Belag sehr genau bis an den Rand des Lebensmittelproduktteils reichen. Das fertige Lebensmittelprodukt kann dann eine glatte Randfläche aufweisen.

Bevorzugt weist der erhabene Bereich vor dem Erwärmen eine sich mit dem Abstand von der Ebene verjüngende Gestalt auf. Zum Beispiel ist der erhabene Bereich konisch geformt.

Der erhabene Bereich kann eine kreisförmige oder ovale Grundfläche aufweisen, er kann auch rippenförmig oder ringförmig geformt sein.

Der am weitesten von der Ebene entfernte Bereich des erhabenen Bereichs, insbesondere eine Spitze, ist bevorzugt mehr als 1mm von der Ebene entfernt.

Die Länge des maximalen Durchmessers der Grundfläche des erhabenen Bereichs beträgt bevorzugt mindestens 3mm.

Die Mindestabmessungen garantieren, dass der erhabene Bereich genügend Belagsmasse umfasst, um eine Haftwirkung zu erreichen.

Insbesondere decken entlang aller Durchmesser der Ebene die Summe aller erhabenen Bereiche nicht mehr als 8/10, bevorzugt nicht mehr als 3/4, der Länge des Durchmessers ab.

Bevorzugt entspricht der Abstand zwischen der Grundfläche des mindestens einen erhabenen Bereichs vom Rand der Ebene mindestens 1/20 vom kleinsten Durchmesser der Ebene.

Das aufgewärmte Material kann so nicht über den Rand der Ebene hinausdringen.

In einer vorteilhaften Ausführung wird der mindestens eine erhabene Bereich von einer Wärmevorrichtung gezielt erwärmt. Dabei wird insbesondere und im Wesentlichen nur der mindestens eine erhabene Bereich des Belags erwärmt und dabei insbesondere erweicht. Dies garantiert, dass die plattenförmige Basisschicht des plattenförmigen Belags nicht erweicht wird und sich auch nicht verformt.

In einem weiteren Verfahrensschritt kann das mit dem Belag verbundene Lebensmittelproduktteil gekühlt werden. Das Lebensmittelproduktteil und der damit verbundene Belag bilden ein geschichtetes Lebensmittelprodukt oder ein geschichtetes Lebensmittelteilprodukt. Das Lebensmittelprodukt oder das Lebensmittelteilprodukt kann beispielsweise durch einen Kühltunnel geführt werden.

Anschliessend kann das Lebensmittelprodukt oder Lebensmittelteilprodukt weiterverarbeitet werden, zum Beispiel noch dekoriert werden und/oder verpackt werden.

Die Aufgabe wird ausserdem gelöst durch eine Vorrichtung zum Verbinden eines ersten im Wesentlichen plattenförmigen Lebensmittelproduktteils mit einem plattenförmigen Belag. Der plattenförmige Belag weist auf mindestens einer Seite mindestens einen von der Ebene erhabenen Bereich auf. Die Vorrichtung dient zum Herstellen eines geschichteten Lebensmittelprodukts oder eines geschichteten Lebensmittelteilprodukts und insbesondere zur Durchführung eines Verfahrens wie es oben beschrieben wurde.

Die Vorrichtung besitzt erfindungsgemäss eine Vorrichtung zum Erwärmen des mindestens einen von der Ebene erhabenen Bereichs und eine Einrichtung zum Aufnehmen, Positionieren und insbesondere zum Andrücken des ersten Lebensmittelproduktteils.

Bevorzugt umfasst die Vorrichtung eine Einrichtung zum Giessen von Belagsmasse, die eine Form zum Formen des Belags mit mindestens einem erhabenen Bereich und einer Dosiervorrichtung für die Belagsmasse umfasst.

Die Einrichtung zum Giessen ist bevorzugt der Vorrichtung zum Erwärmen vorgeordnet. Zwischen der Einrichtung zum Giessen und der Vorrichtung zum Erwärmen kann sich eine Umsetzvorrichtung befinden, mit welcher der Belag aus der Form entfernt wird und bevorzugt gedreht wird, damit der mindestens eine erhabene Bereich zugänglich für die Vorrichtung zum Erwärmen ist. Bei der Umsetzvorrichtung kann es sich beispielsweise um ein Band, einen Roboterarm oder um einen Formenwender handeln.

Vorzugsweise weist die Form im Bodenbereich ein Profil auf, das mindestens einen erhabenen Bereich definiert. Das Profil ist beispielweise so ausgeführt, dass sich der mindestens eine erhabene Bereich mit wachsendem Abstand von der Ebene verjüngt.

In einer vorteilhaften Ausführung der Erfindung besitzt die Vorrichtung eine Einrichtung zum Aufnehmen, Positionieren und insbesondere Andrücken eines zweiten Lebensmittelproduktteils.

Dabei kann es sich beispielsweise um eine Pick und Place Einheit handeln, welche die zweiten Lebensmittelproduktteile heranbringt und absetzt.

Diese ist bevorzugt der Vorrichtung zum Giessen der Belagsmasse direkt nachgeordnet oder zusammen mit der Einrichtung zum Giessen ausgeführt, so dass das zweite Lebensmittelproduktteil auf noch nicht verfestigte Belagsmasse, die sich in der Form befindet, aufgebracht werden kann.

In einer weiteren vorteilhaften Ausführung umfasst die Vorrichtung eine Umsetzvorrichtung zum Umsetzen des mit dem Belag verbundenen zweiten Lebensmittelproduktteils. Bei der Umsetzvorrichtung kann es sich beispielsweise um eine Pick und Place Einheit, ein Band, einen Roboterarm und/oder um einen Formenwender handeln.

Dabei wird das mit dem Belag verbundene zweite Lebensmittelproduktteil von der Form entfernt, so dass der mindestens eine erhabene Bereich der Vorrichtung zum Erwärmen zugänglich ist. Bevorzugt wird das zweite Lebensmittelproduktteil zusammen mit dem Belag translatorisch bewegt und/oder gedreht.

Bei der Vorrichtung zum Erwärmen des mindestens einen erhabenen Bereichs handelt es sich um eine Vorrichtung, die ein gezieltes Erwärmen mindestens eines begrenzten Bereichs, der bevorzugt kleiner ist als die Ebenenfläche des Belags, ermöglicht. Insbesondere umfasst die Vorrichtung zum Erwärmen eine Abschirmschablone.

Vorteilhafterweise ist die Vorrichtung zum Erwärmen eine Vorrichtung, die das gezielte Erwärmen von mindestens einem erhabenen Bereich mit kreisförmiger oder ovaler Grundfläche ermöglicht. Die Länge des maximalen Durchmessers der Grundfläche beträgt bevorzugt mindestens 3mm.

Alternativ oder zusätzlich kann die Vorrichtung das Erwärmen eines Bereich mit rechteckiger Grundfläche ermöglichen. Die Vorrichtung ist dabei bevorzugt so ausgelegt, dass sie Bereiche mit einem maximalen Durchmesser von bis zu 3 mm erwärmt. Die Vorrichtung ist weiterhin bevorzugt so ausgelegt, dass die neben den erhabenen Bereichen liegenden Gebiete keine direkte Wärmezufuhr erhalten.

Erfindungsgemäss umfasst die Vorrichtung zum Erwärmen des mindestens einen erhabenen Bereichs ein Infrarotheizfeld.

Vorteilhafterweise umfasst die Vorrichtung eine Kühlvorrichtung zum Abkühlen eines mit dem Belag verbundenen Lebensmittelproduktteils.

Die Aufgabe wird weiterhin gelöst durch eine Verwendung einer Vorrichtung zum Erwärmen mindestens eines erhabenen Bereichs auf einer Seite eines plattenförmigen Belags und anschliessenden Verbinden des Belags mit einem plattenförmigen Lebensmittelproduktteil.

Die Erfindung wird nachfolgend in Ausführungsbeispielen anhand von Zeichnungen erläutert.

Es zeigen
- Figur 1: eine schematische Darstellung eines ersten Verfahrensschritts;
- Figur 2: eine schematische Darstellung eines zweiten Verfahrensschritts;
- Figur 3: eine schematische Darstellung eines dritten Verfahrensschritts;
- Figur 4: eine schematische Darstellung eines vierten Verfahrensschritts;
- Figur 5: eine schematische Darstellung eines fünften Verfahrensschritts;
- Figur 6: eine schematische Darstellung eines sechsten Verfahrensschritts;
- Figuren 7a-d: schematische Darstellungen von Beispielen für unterschiedliche Formen;
- Figur 8: ein erstes Beispiel für einen Belag in Draufsicht;
- Figur 9a: ein weiteres Beispiel für einen Belag in Draufsicht;
- Figur 9b: ein weiteres Beispiel für einen Belag in Draufsicht;
- Figur 9c: ein weiteres Beispiel für einen Belag in Draufsicht.

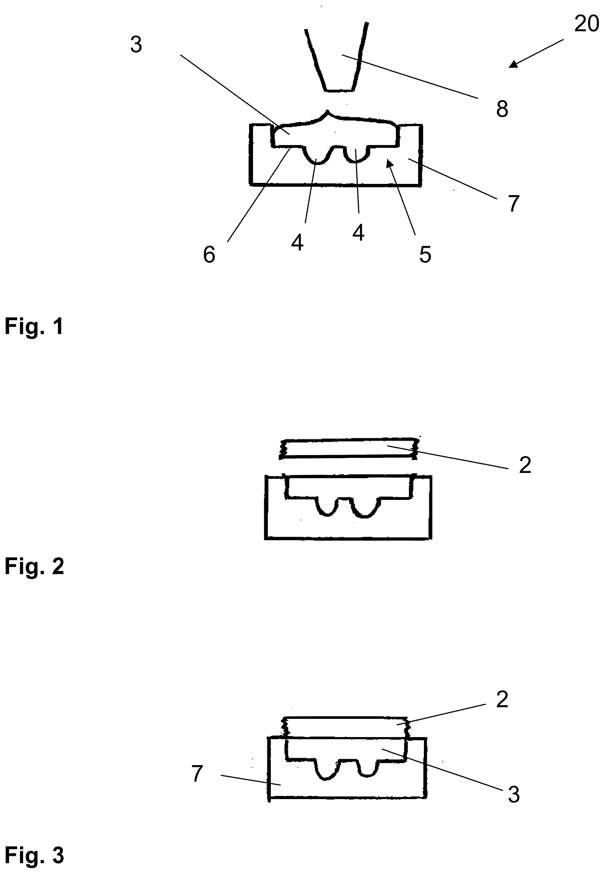

Die Figuren 1-6 zeigen in einer schematischen Darstellung Schritte eines beispielhaften Verfahrens.

Bei dem erfindungsgemässen Verfahren kann zunächst ein plattenförmiger Belag 3 hergestellt werden, der auf mindestens einer Seite 5 mindestens einen von einer Ebene 6 erhabenen Bereich 4 aufweist. Der Belag kann beispielsweise zwei erhabene Bereiche 4 aufweisen.

Der Belag 3 wird beispielsweise in einer Form 7 hergestellt, welche das Profil der erhabenen Bereiche 4 vorgibt.

Die Herstellung erfolgt in einer Einrichtung 20 zum Giessen. Darin wird Belagsmaterial aus einer Dosiervorrichtung 21, hier einer Düse, in die Form 7 dosiert. Selbstverständlich können gleichzeitig viele Formen mit einer Vielzahl von Düsen befüllt werden.

Beispielsweise kann gegenüber der Raumtemperatur erwärmte Schokoladenmasse in die Form 7 dosiert werden und dort erstarren.

Wie in Figur 2 gezeigt ist, wird beispielweise ein zweites Lebensmittelproduktteil 2 bereitgestellt. Bei dem zweiten Lebensmittelprodukt kann es sich um ein Gebäckteil handeln.

Wie in Figur 3 gezeigt ist, kann das zweite Lebensmittelproduktteil 2 auf den Belag 3 gelegt werden, der sich noch in der Form 7 befindet, bevorzugt bevor der Belag 3 verfestigt ist.

Der Belag 3 haftet an dem zweiten Lebensmittelproduktteil 2 und so entsteht nach der Verfestigung der Belagsmasse eine dauerhafte Verbindung zwischen auf dem Belag 3 und dem zweiten Lebensmittelproduktteil 2.

Falls es notwendig sein sollte, kann zusätzlich eine Kraft aufgebracht werden, zum Beispiel das zweite Lebensmittelproduktteil 2 an den Belag 3 angedrückt werden.

Bevorzugt entsprechen sich die Aussenkonturen von dem zweiten Lebensmittelproduktteil 2 und dem Belag 3. Das mit dem Belag 3 verbundene Lebensmittelproduktteil 2 kann anschliessend, zum Beispiel in einem Kühltunnel gekühlt werden. Dazu kann der Belag 3 in der Form 7 verbleiben oder daraus entfernt werden.

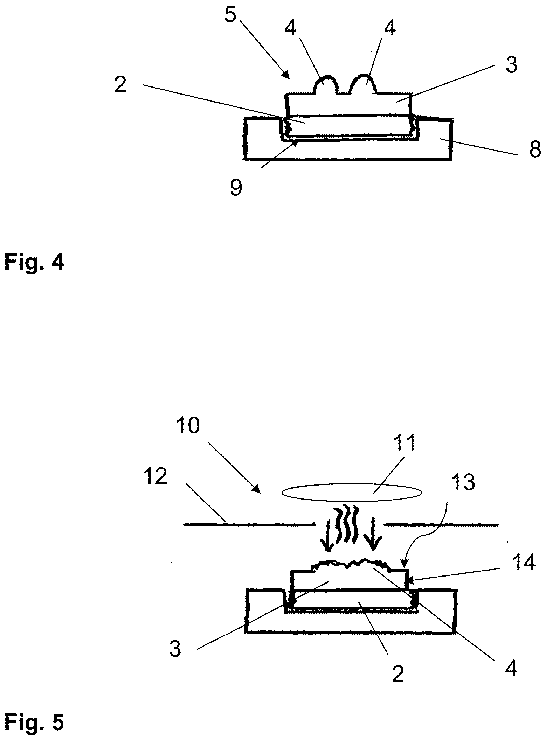

Wie in Figur 4 gezeigt ist, kann das zweite Lebensmittelproduktteil 2 zusammen mit dem Belag 3 umgesetzt werden, wobei der Belag 3 aus der Form 7 entfernt wird. Das zweite Lebensmittelproduktteil 2 kann zusammen mit dem Belag 3 gedreht werden und in einer Gegenform 8 abgelegt werden, so dass der mindestens eine erhabene Bereich 4 von der Gegenform 8 weg weist.

Die Gegenform 8 weist eine Aufnahme 9 für das zweite Lebensmittelproduktteil 2 auf.

Wie in Figur 5 gezeigt ist, erfolgt ein Anwärmen des erhabenen Bereichs 4. Dies geschieht bevorzugt mit einer Vorrichtung 10 zum Erwärmen, umfassend ein Infrarotheizfeld 11 und eine Abschirmschablone 12. Durch die Abschirmschablone 12 wird erreicht, dass ein gezieltes Erwärmen eines begrenzten Bereichs erfolgt, der kleiner ist als die Oberfläche des Belags 3. Insbesondere wird der Randbereich 13 des Belags 3 nicht erwärmt, so dass die Randfläche 14 die von der Form 7 vorgegeben Form und Oberflächentextur beibehält.

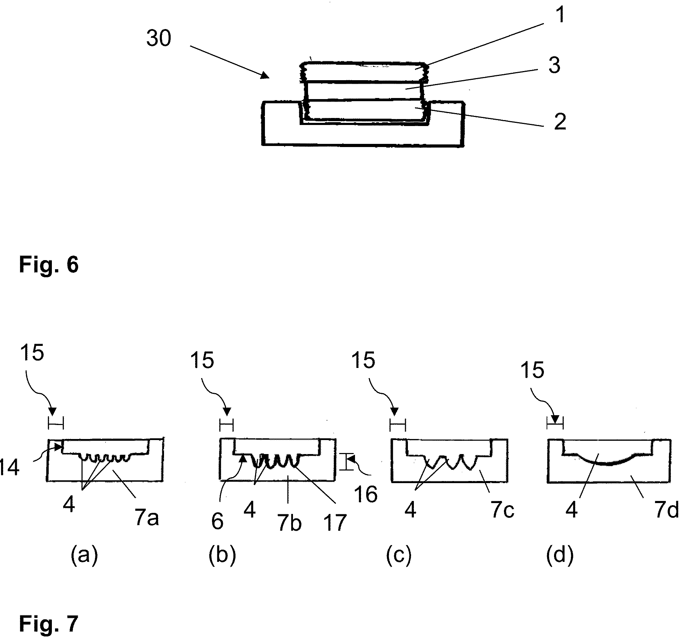

Je nach Belagsmaterial wird mehr oder weniger Wärme eingeleitet. Es reicht, wenn das Belagsmaterial der erhabenen Bereiche sich unter dem Gewicht des Lebensmittelproduktteils 1 verformt (siehe Figur 6).

Wie in Figur 6 dargestellt ist, kann ein erstes Lebensmittelproduktteil 1 bereitgestellt werden, das auf der Seite 5 des Belags 3 mit den erwärmten erhabenen Bereichen 4 positioniert wird, siehe Figur 4.

Es erfolgt dann das Herstellen der Verbindung zwischen Lebensmittelproduktteil 1 und Belag 3. Das erwärmte Belagsmaterial haftet an dem ersten Lebensmittelproduktteil 1 und so entsteht nach der Verfestigung der Belagsmasse eine dauerhafte Verbindung zwischen auf dem Belag 3 und dem ersten Lebensmittelproduktteil 1. Der Belag 3 hat dann eine flache Form und bildet eine zu den Lebensmittelprodukten 1 und 2 parallel verlaufende Schicht.

Falls es notwendig sein sollte, kann zusätzlich eine Kraft aufgebracht werden, zum Beispiel das erste Lebensmittelproduktteil 1 an den Belag 3 angedrückt werden. Das geschichtete Lebensmittelprodukt 30 kann anschliessend gekühlt werden.

Figuren 7a-d zeigen schematische Darstellungen von Beispielen für unterschiedliche Formen 7a, 7b, 7c, 7d.

Mit den Formen 7a, 7b und 7c werden jeweils eine Vielzahl von erhabenen Bereichen 4 erzielt, während in der Form 7d nur ein erhabener Bereich 4 herstellbar ist.

Allen Formen 7a, 7b, 7c, 7d ist gemeinsam, dass die erhabenen Bereiche einen Mindestabstand 15 zur Randfläche 14 aufweisen. Dieser Abstand beträgt bevorzugt mindestens 1mm.

Die Spitze 17 des mindestens einen erhabenen Bereichs 4 weist einen Abstand 16 von der Ebene auf, der bevorzugt grösser als 1mm ist.

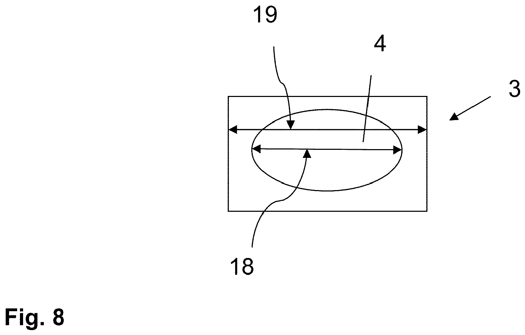

Figur 8 zeigt ein erstes Beispiel für einen Belag 3 mit einem erhabenen Bereich 4 in Draufsicht. Der Belag hat eine ovale Grundfläche. Der maximale Durchmesser 18 der Grundfläche des erhabenen Bereichs 4 beträgt mindestens 3mm.

Die Länge des maximalen Durchmessers 18 der Grundfläche des erhabenen Bereichs entspricht bevorzugt maximal 9/10 der maximalen Länge 19 der Ebene 6.

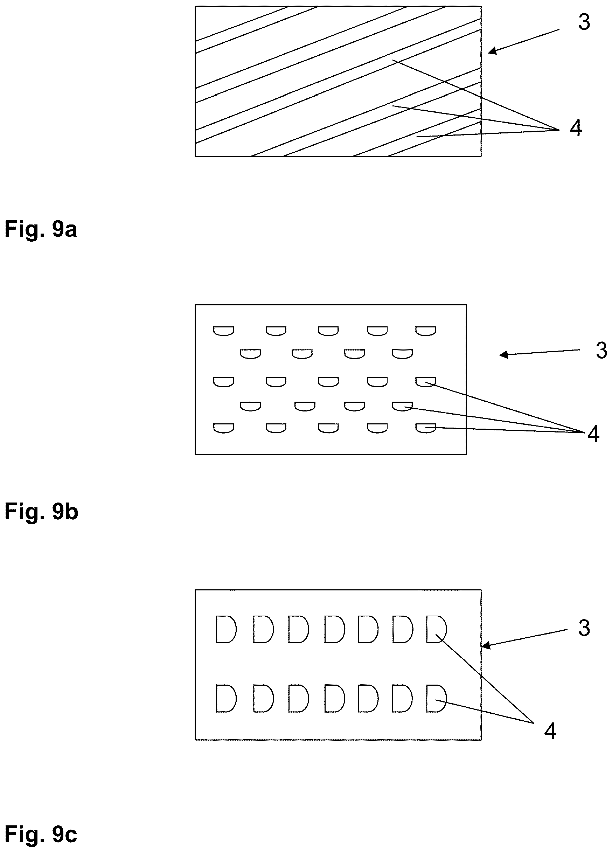

Figuren 9a-9c zeige weitere Beispiele für einen Belag 3 mit erhabenen Bereichen 4 in Draufsicht.

Die erhabenen Beläge 3 können, wie in Figur 9a dargestellt, streifenförmig angeordnet sein, wie in Figur 9b dargestellt, in versetzten Reihen oder, wie in Figur 9c dargestellt, in parallelen Reihen.

## Patentansprüche

1. Verfahren zum Herstellen eines geschichteten Lebensmittelprodukts (30), welches mindestens ein erstes, im wesentlichen plattenförmiges Lebensmittelproduktteil (1, 2), nämlich ein erstes Gebäckteil, und einen auf diesem angeordneten plattenförmigen Belag (3), der aus einer Belagsmasse besteht, bei der es sich um eine Fettmasse, eine Schokoladenmasse, eine Compoundmasse, eine Zuckermasse, eine Fondantmasse, ein Gelee, eine Marmelade, eine Fruchtmasse und/oder eine anderweitig aushärtende wasser- und zuckerbasierte Masse handelt, umfasst, **gekennzeichnet durch** die folgenden Arbeitsschritte:
- Herstellen oder Bereitstellen des plattenförmigen Belags (3) in einer Form (7), wobei der Belag (3) auf mindestens einer Seite (5) mindestens einen von einer Ebene (6) erhabenen Bereich (4) aufweist, wobei die Form das Profil des mindestens einen erhabenen Bereichs (4) auf einer Seite des Belags (3) vorgibt;
- Anwärmen des erhabenen Bereichs (4);
- Herstellen oder Bereitstellen mindestens eines Lebensmittelproduktteils (1, 2);
- Positionieren des Lebensmittelproduktteils (1) auf der Seite des Belags (3) mit dem erwärmten erhabenen Bereich (4);
- Herstellen der Verbindung zwischen Lebensmittelproduktteil (2) und Belag (3), insbesondere Andrücken des Lebensmittelproduktteils (1) auf den erwärmten erhabenen Bereich (4),
wobei der mindestens eine erhabene Bereich von einer Vorrichtung zum Erwärmen (10) gezielt erwärmt wird, so dass die plattenförmige Basisschicht des plattenförmigen Belags nicht erweicht wird und sich auch nicht verformt.

2. Verfahren gemäss Anspruch 1, wobei ein zweites Lebensmittelproduktteil (2), nämlich ein zweites Gebäckteil, hergestellt oder bereitgestellt wird, das auf noch nicht verfestigte Belagsmasse in der Form (7) aufgelegt und insbesondere angedrückt wird.

3. Verfahren gemäss Anspruch 2, wobei das zweite Lebensmittelproduktteil (2) zusammen mit dem Belag (3) umgesetzt wird, wobei der Belag (3) aus der Form (7) entfernt wird.

4. Verfahren gemäss Anspruch 3, wobei das zweite Lebensmittelproduktteil (2) zusammen mit dem Belag (3) in einer Gegenform (8) abgelegt wird, so dass der mindestens eine erhabene Bereich (4) von der Gegenform (8) weg weist.

5. Verfahren gemäss einem der Ansprüche 1-4, wobei der am weitesten von der Ebene entfernte Bereich des erhabenen Bereichs, insbesondere die Spitze (17) des mindestens einen erhabenen Bereichs (4), einen Abstand (16) von der Ebene (6) aufweist, der grösser als 1mm ist, die Länge des maximalen Durchmessers (18) der Grundfläche des erhabenen Bereichs mindestens 3mm beträgt und/oder die Länge des maximalen Durchmessers (18) der Grundfläche des erhabenen Bereichs maximal 9/10 der maximalen Länge (19) oder Breite der Ebene (6) ist.

6. Verfahren gemäss einem der Ansprüche 1-5, wobei entlang aller Durchmesser der Ebene die Summe aller erhabenen Bereiche nicht mehr als 8/10, bevorzugt nicht mehr als 3/4, der Länge des Durchmessers abdecken.

7. Verfahren gemäss einem der Ansprüche 1-6, wobei die Vorrichtung zum Erwärmen (10) des mindestens einen erhabenen Bereichs (4) ein Infrarotheizfeld (11) und eine Abschirmschablone (12) umfasst.

8. Vorrichtung zum Verbinden eines ersten, im wesentlichen plattenförmigen Lebensmittelproduktteils (1, 2), nämlich eines erstes Gebäckteils, mit einem plattenförmige Belag (3), der auf mindestens einer Seite mindestens einen von einer Ebene erhabenen Bereich (4) aufweist, zum Herstellen eines geschichteten Lebensmittelprodukts (30), insbesondere zur Durchführung des Verfahrens nach einem der Ansprüche 1-7, **gekennzeichnet dadurch, dass** die Vorrichtung eine Vorrichtung zum Erwärmen (10) des von der Ebene (6) erhabenen Bereichs (4)
und eine Einrichtung zum Aufnehmen, Positionieren und bevorzugt Andrücken des ersten Lebensmittelproduktteils (2) umfasst,
wobei die Vorrichtung zum Erwärmen (10) des mindestens einen erhabenen Bereichs (4) ein gezieltes Erwärmen eines begrenzten Bereichs, der bevorzugt kleiner ist als die Ebenenfläche des Belags (3), ermöglicht, wobei die Vorrichtung zum Erwärmen (10) des mindestens einen erhabenen Bereichs (4) ein Infrarotheizfeld (11) und eine Abschirmschablone (12) umfasst .

9. Vorrichtung nach Anspruch 8, wobei die Vorrichtung eine Einrichtung zum Giessen (20) von Belagsmasse (3) aufweist, die eine Form (7) zum Formen des Belags (3) mit mindestens einem erhabenen Bereich (4) und eine Dosiervorrichtung (21) für die Belagsmasse umfasst.

10. Vorrichtung nach Anspruch 9, wobei die Form (7) ein Profil des mindestens einen erhabenen Bereichs (4) definiert, das sich mit wachsendem Abstand von der Ebene verjüngt.

11. Vorrichtung nach einem der Ansprüche 8 bis 10, wobei die Vorrichtung eine Einrichtung zum Aufnehmen, Positionieren und bevorzugt Andrücken eines zweiten Lebensmittelproduktteils (1) umfasst.

12. Vorrichtung nach Anspruch 11, wobei die Vorrichtung eine Umsetzvorrichtung zum Umsetzen des mit dem Belag (3) verbundenen zweiten Lebensmittelproduktteils (2) umfasst.

13. Vorrichtung nach Anspruch 12, wobei die Vorrichtung eine Gegenform (8) zum Ablegen eines mit dem Belag (3) verbundenen Lebensmittelproduktteils (2) aufweist.

14. Vorrichtung nach einem der Ansprüche 8-13, wobei die Vorrichtung zum Erwärmen (10) das gezielte Erwärmen von mindestens einem erhabenen Bereich (4) mit kreisförmiger oder ovaler Grundfläche ermöglicht, deren maximaler Durchmesser bevorzugt mindestens 3mm beträgt, und/oder wobei die Vorrichtung zum Erwärmen (10) das gezielte Erwärmen von mindestens einem erhabenen Bereich (4) mit im Wesentlichen rechteckiger Grundfläche ermöglicht.

## Claims

1. A method for producing a layered food product (30), which comprises at least a first, essentially plate-shaped food product part (1, 2), namely a first pastry part, and a plate-shaped covering (3) arranged thereon, which consists of a covering composition, is a fat-based mass, a chocolate-based mass, a compound-based mass, a sugar-based mass, a fondant-based mass, a jelly, a jam, a fruit-based mass and/or a water- and sugar-based mass that hardens in a different way, **characterized by** the following steps:
- producing or providing the plate-shaped covering (3) in a form (7), the covering (3) having on at least one side (5) at least one area (4) projecting from a plane (6), the form determining the profile of the at least one projecting area (4) on one side of the covering (3);
- heating the projecting area (4);
- producing or providing at least one food product part (1, 2) ;
- positioning the food product part (1) on the side of the covering (3) with the heated projecting area (4);
- producing the connection between the food product part (2) and the covering (3), in particular pressing the food product part (1) onto the heated projecting area (4),
wherein the at least one projecting area is selectively heated by a heating device (10) so that the plate-shaped base layer of the plate-shaped covering is not softened and does not deform.

2. The method according to claim 1, wherein a second food product part (2), namely a second pastry part, is produced or provided, which is placed on the not yet solidified covering mass in the mold (7) and in particular pressed on.

3. The method according to claim 2, wherein the second food product part (2) is replaced together with the covering (3), wherein the covering (3) is removed from the mold (7).

4. The method according to claim 3, wherein the second food product part (2) together with the covering (3) is placed in a counter mold (8) so that the at least one projecting area (4) faces away from the counter mold (8).

5. The method according to one of claims 1-4, wherein the area of the projecting area furthest from the plane, in particular the tip (17) of the at least one projecting area (4), is at a distance (16) from the plane (6) which is greater than 1 mm, the length of the maximum diameter (18) of the base of the projecting area is at least 3 mm and/or the length of the maximum diameter (18) of the base of the projecting area is at most 9/10 of the maximum length (19) or width of the plane (6).

6. The method according to any one of claims 1-5, wherein along all diameters of the plane the sum of all projecting areas does not cover more than 8/10, preferably not more than 3/4, of the length of the diameter.

7. The method according to any one of claims 1-6, wherein the device for heating (10) the at least one projecting area (4) comprises an infrared heating field (11) and a shielding template (12).

8. A device for connecting a first, essentially plate-shaped food product part (1, 2), namely a first pastry part, to a plate-shaped covering (3), which has at least one projecting area (4) on at least one side , for producing a layered food product (30), in particular for carrying out the method according to one of claims 1-7, **characterized in that** the device comprises a device for heating (10) the area (4) projecting from the plane (6)
and a device for receiving, positioning and preferably pressing on the first food product part (2),
wherein the device for heating (10) the at least one projecting area (4) allows for targeted heating of a limited area, preferably smaller than the planar surface of the covering (3), wherein the device for heating (10) the at least one projecting area (4) comprises an infrared heating field (11) and a shielding template (12).

9. The device according to claim 8, wherein the device comprises a device for casting (20) covering material (3) comprising a mold (7) for molding the covering (3) with at least one projecting area (4) and a metering device (21) for the covering material.

10. The device according to claim 9, wherein the mold (7) defines a profile of the at least one projecting area (4) that tapers with increasing distance from the plane.

11. The device according to any one of claims 8 to 10,
wherein the apparatus comprises a device for receiving, positioning and preferably pressing a second food product part (1).

12. The device according to claim 11, wherein the device comprises a transfer device for transferring the second food product part (2) connected to the covering (3).

13. The device according to claim 12, wherein the device comprises a counter-mold (8) for depositing a food product part (2) connected to the covering (3).

14. The device according to one of claims 8-13, wherein the heating device (10) allows for the targeted heating of at least one projecting area (4) with a circular or oval base area , the maximum diameter of which is preferably at least 3 mm, and/or wherein the heating device (10) enables the targeted heating of at least one projecting area (4) with a substantially rectangular base area.

## Revendications

1. Procédé de fabrication d'un produit alimentaire en couches (30), qui comprend au moins une première pièce de produit alimentaire (1, 2), sensiblement en forme d'assiette, à savoir une première pièce de pâtisserie, et un couvercle en forme d'assiette (3) disposée sur la première pièce de pâtisserie, et qui consiste en une composition de couvercle, est une masse à base de graisse, une masse à base de chocolat, une masse composée, une masse à base de sucre, une masse à base de fondant, une gelée, une confiture, une masse à base de fruits et/ou une masse à base d'eau et de sucre qui durcit d'une manière différente, **caractérisé par** les étapes suivantes :
- produire ou fournir le couvercle en forme d'assiette (3) sous une forme (7), le couvercle (3) présentant sur au moins un côté (5) au moins une zone en saillie (4) par rapport à un plan (6), la forme déterminant le profil du au moins une zone en saillie (4) sur un côté du couvercle (3) ;
- chauffer la zone en saillie (4) ;
- produire ou fournir au moins une partie de produit alimentaire (1, 2) ;
- positionner la pièce de produit alimentaire (1) sur le côté du couvercle (3) avec la zone en saillie chauffée (4) ;
- réalisation de la liaison entre la partie de produit alimentaire (2) et le couvercle (3), en particulier en pressant la partie de produit alimentaire (1) sur la zone en saillie chauffée (4),
dans laquel l'au moins une zone en saillie est sélectivement chauffée par un dispositif chauffage (10) de sorte que la couche de base en forme d'assiette du couvercle en forme d'assiette n'est pas ramollie et ne se déforme pas.

2. Procédé selon la revendication 1, dans lequel est produit ou est fournit une deuxième pièce de produit alimentaire (2), à savoir une deuxième pièce de pâtisserie, qui est placée sur la masse de couvercle non encore solidifiée dans le moule (7) et en particulier pressée.

3. Procédé selon la revendication 2, dans lequel la deuxième pièce de produit alimentaire (2) est remplacée en même temps que le couvercle (3), le couvercle (3) étant retirée du moule (7).

4. Procédé selon la revendication 3, dans lequel la deuxième partie de produit alimentaire (2) avec le couvercle (3) est placée dans un contre-moule (8) de sorte que l'au moins une zone en saillie (4) soit orientée à l'opposé du contre-moule (8).

5. Procédé selon l'une des revendications 1 à 4, dans lequel la zone la plus éloignée du plan de la zone saillante, en particulier la pointe (17) du au moins une zone en saillie (4), se trouve à une distance (16) du plan (6) supérieure à 1 mm, la longueur du diamètre maximal (18) de la base de la zone saillante est d'au moins 3 mm et/ou la longueur du diamètre maximal (18) de la base de la zone saillante est au plus égale à 9/10 de la longueur maximale (19) ou de la largeur du plan (6).

6. Procédé selon l'une quelconque des revendications 1 à 5, dans lequel, le long de tous les diamètres du plan, la somme de toutes les zones en saillie ne couvre pas plus de 8/10, de préférence pas plus de 3/4, de la longueur du diamètre.

7. Procédé selon l'une quelconque des revendications 1 à 6, dans lequel le dispositif de chauffage (10) de l'au moins une zone en saillie (4) comprend un champ de chauffage infrarouge (11) et un modèle de protection (12).

8. Dispositif de raccordement d'une première pièce alimentaire, sensiblement en forme d'assiette (1, 2), à savoir une première pièce de pâtisserie, à une couvercle en forme d'assiette (3), qui présente au moins une zone en saillie (4) sur au moins un côté , pour la réalisation d'un produit alimentaire en couches (30), notamment pour la mise en œuvre du procédé selon l'une des revendications 1-7, **caractérisé en ce que** le dispositif comprend un dispositif de chauffage (10) de la zone en saillie (4) par rapport au plan (6)
et un dispositif de réception, de positionnement et de préférence de pressage sur la première partie de produit alimentaire (2),
dans lequel le dispositif de chauffage (10) de l'au moins une zone en saillie (4) permet de chauffer de manière ciblée une zone limitée, de préférence plus petite que la surface plane du revêtement (3), dans lequel le dispositif de chauffage (10) de l'au moins une zone en saillie (4) comprend un champ de chauffage infrarouge (11) et un modèle de protection (12).

9. Dispositif selon la revendication 8, dans lequel le dispositif comprend un dispositif de moulage (20) du matériau de recouvrement (3) comprenant un moule (7) pour mouler le couvercle (3) avec au moins une zone en saillie (4) et un dispositif de dosage (21) du matériau de recouvrement.

10. Le dispositif selon la revendication 9, dans lequel le moule (7) définit un profil de l'au moins une zone en saillie (4) qui se rétrécit avec l'augmentation de la distance par rapport au plan.

11. Le dispositif selon l'une quelconque des revendications 8 à 10, dans lequel l'appareil comprend un dispositif de réception, de positionnement et de préférence de pressage d'une deuxième pièce de produit alimentaire (1).

12. Le dispositif selon la revendication 11, dans lequel l'appareil comprend un dispositif de transfert pour transférer la deuxième partie de produit alimentaire (2) reliée au couvercle (3).

13. Dispositif selon la revendication 12, dans lequel le dispositif comprend un contre-moule (8) pour déposer la pièce de produit alimentaire (2) reliée à la couvercle (3).

14. Le dispositif selon l'une des revendications 8 à 13, dans lequel le dispositif de chauffage (10) permet le chauffage ciblé d'au moins une zone en saillie (4) dont la surface de base est circulaire ou ovale, dont le diamètre maximal est de préférence d'au moins 3 mm, et/ou dans lequel le dispositif de chauffage (10) permet le chauffage ciblé d'au moins une zone en saillie (4) dont la surface de base est sensiblement rectangulaire.
